# EUROPEAN PATENT APPLICATION

(11) **EP 1 884 334 A1**
(43) Date of publication of application: **06.02.2008**
(21) Application number: 07014509.9
(22) Date of filing: 24.07.2007
(51) Int. Cl.: B29B 17/00, D03D 15/02

(54) **Woven recycled product**

(30) Priority: 31.07.2006 IT MI20061515
(71) Applicant: Politecnico Di Milano, 20133 Milano (IT)
(72) Inventor: Leoni, Daniela, 03100 Frosinone (IT); Bertola, Paola, 29100 Piacenza (IT)
(74) Representative: Simino, Massimo

(57) **Abstract**

The present invention relates to a product (1) and a method for making such product (1), The product (1) has a weft (2) and a warp (3) and is characterized in that the weft (2) and/or the warp (3) are formed of strips (4) of polylarrtinate material said strips (4) of polylaminate material being obtained from production scrap.

## Description

The present invention relates to a product made from reused production scrap and a process for making such product, according to the preambles of claims 1 and 13 respectively.

More particularly, the present invention relates to a product made by reusing from the scrap arising from the production of polylaminate materials for packaging.

The term polylaminate, as used herein, is meant to indicate a composite or multilayer flexible film, i.e. a film composed of two or more sheets of different materials joined together.

For example, these sheets may be formed of materials such as polyethylene, polypropylene, cardboard, aluminum, nylon, etc.

These polylaminate materials are usually employed for manufacturing containers or recipients for food, such as coffee grounds and/or beans, milk, fruit juices, wine, etc.

Particularly, for the polylaminate material to be used for forming such recipients or containers, it is typically unwound from a roll and is subjected to several processing operations, such as molding, coupling and cutting to the final shape.

During such processing steps, some amount of scrap or waste is produced.

This scrap arises during polylaminate cutting operations.

The scrap is produced in the form of strips of various lengths, as obtained from the cutting of the peripheral portions of the polylaminate material unwound from the roll, which usually occurs longitudinally with respect to the polylaminate unwinding direction.

As a byproduct of the container manufacturing process, the scrap is thus rejected and stored for the landfill, which involves obvious and imaginable drawbacks in terms of both environment protection and costs.

It shall be noted that, due to the structure of polylaminate material, the scrap cannot be recycled, as the various materials that form the film cannot be separated unless a special technology or a pyrolysis process is used, which increases the overall costs for the recycling procedure.

In view of the prior art as described above, the object of the present invention is to reuse these polylaminate films that form the manufacturing scrap, which constitute an environmental, ecological and economical burden.

A further object of the present invention is to increase the scrap recycling yield to reduce the overall costs of polycarbonate container manufacturing processes.

According to the present invention, these objects are fulfilled by a product as defined in claim 1.

Still according to the present invention, these objects are also fulfilled by a method for making such product as defined in claim 13.

Thanks to the present invention, a product may be obtained which exhibits certain characteristics of the scrap material, and can feature certain properties directly deriving from the specific polylaminate material that is used in the container manufacturing process.

The features and advantages of the invention will appear from the following detailed description of one practical embodiment, which is illustrated without limitation in the annexed drawings, in which:

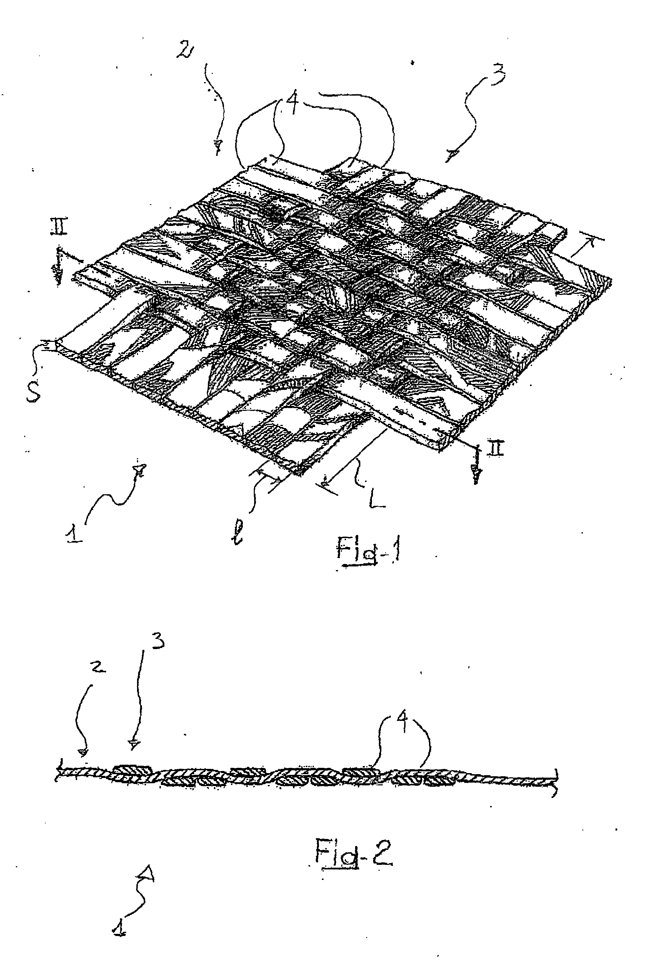

- Figure 1 shows a product having a weft and a warp according to the present invention;
- Figure 2 is a sectional view as taken along line II-II of the product of Figure 1;
- Figure 3 shows a possible polylaminate structure adapted to form the product of Figure 1;
- Figure 4 shows another possible polylaminate structure adapted to form the product of Figure 1.

Referring to the annexed figures, numeral 1 generally designates a product having a weft 2 and a warp 3.

Advantageously, the weft 2 and/or the warp 3 are strips 4 of polylaminate material.

Particularly, the strips 4 of polylaminate material have predetermined length "L", width "l" and thickness "S".

It shall be noted that both the length "L" and the thickness "S" of the strip 4 are a function of the size and thickness of the roll (not shown in the figures) from which the polylaminate is unwound.

The width "P' may be caused to change from one product to another depending on the desired surface effect, a reasonable value being greater than at least 1 mm.

It shall be further noted that the weft 2 and/or the warp 3 may have different lengths "L' depending on the desired type of weave.

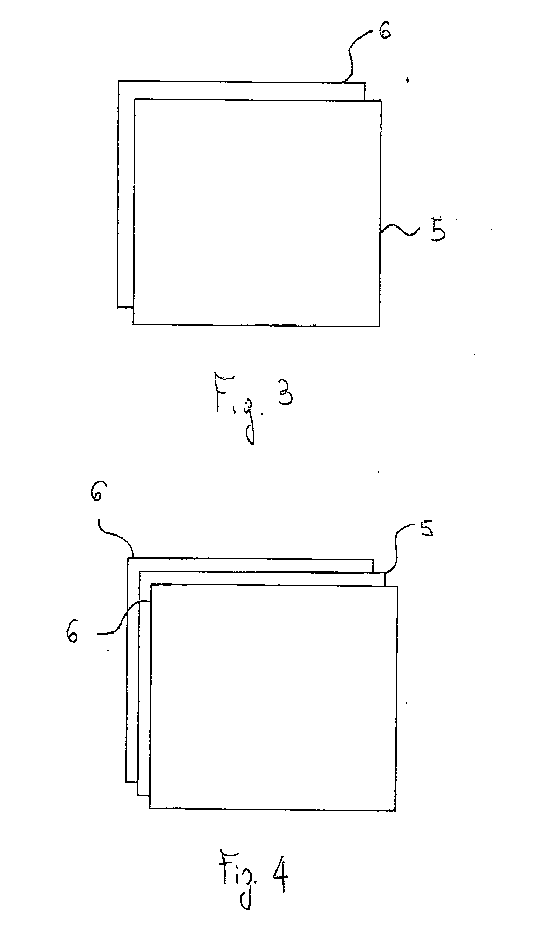

The polylaminate material generally has a structure comprising two (see Figure 3) or more (see Figure 4) different sheets in joined relationship, as is well known in the art.

For instance, particularly referring to Figure 3, it can be noticed that the structure of the polylaminate material may be composed of a first sheet 5 of metal material and a second sheet 6 of polymer material.

Advantageously, such first sheet 5 of metal material is made of aluminum and such second sheet 6 of polymer material is made of polypropylene.

Otherwise, such second sheet 6 of polymer material may be made of polyethylene.

Referring now to Figure 4, which shows another possible polylaminate structure for use in the product 1 of the present invention, it can be noted that the first sheet 5 of metal material is both internally and externally covered with the second sheet 6 of polymer material.

Particularly, in the preferred embodiment, a structure may be provided in which the first sheet 5 of metal material, preferably aluminum, is internally covered with a polyethylene sheet and externally covered with a polypropylene sheet.

Alternatively, the first sheet 5 of metal material, preferably aluminum, may be internally covered with a polypropylene sheet and externally covered with a polyethylene sheet.

It shall be noted that a polylaminate material that can be used to make the product 1 can embody other structures having at least two sheets 5, 6 joined together and formed of specific materials, such as:
- Arnite/Omnialite + Aluminum + Polyethylene;
- Polypropylene + Aluminum + Polypropylene;
- Polypropylene + Polypropylene;
- Paper + Aluminum + Polyethylene;
- Polypropylene + Paper + Aluminum + Polyethylene;
- Arnite/Omnialite + Arnite/Omnialite + Polyethylene;
- Arnite/Omnialite + Polyethylene.

Therefore, the present invention relates to the product 1, in which the weft 2 and/or the warp 3 are strips 4 of polylaminate material as described above.

These strips of polylaminate material are obtained from the processing scrap that arises from the production of food containers (not shown).

Advantageously, the above product 1 is formed using a production method that comprises the following processing steps:
- Recovering the polylaminate scrap from the container production process;
- Cutting such scrap into strips 4, said strips 4 having predetermined width "I", length "L" and thickness "S";
- Weaving said strips 4 to obtain said product 1.

In other words, the polylaminate material that forms the scrap has to be subjected first to a cutting process for forming thin strips 4 and then to a weaving process.

It shall be noted that, by this weaving process, scrap of suitable size is braided to form the product 1, with the scrap itself forming the weft 2, the warp 3 or both.

Thus, the polylaminate scrap may find novel application in common weaving techniques that are used to form lattices and fabrics.

For example, the scrap may be woven with anyone of the following patterns:
- Plain weave, i.e. the simpler pattern, in which the weft and the warp are at right angles to each other;
- Twill, i.e. the most complex pattern, characterized by diagonal ribs;
- Satin weave, i.e. the weave in which the braiding points are aligned in the diagonal direction.

In other words, the polycarbonate scrap, when processed by the above cutting and weaving operations, may find application in any weaving operation in textile industry.

Therefore, the product 1 obtained by the inventive method is a product that has a unique surface appearance, which depends on the type of polylaminate scrap and on the type of weave being used.

While the present invention is advantageously used for recovery of polylaminate production scrap, a graphically designed weave will allow control and selection of the surface effect to be imparted to the novel product.

The recovery of scrap from the production of polylaminate material having a printed surface, will provide a product in which the original print is still recognizable.

In other words, a product may be obtained whose surface recalls the print of the original polylaminate.

It shall be further noticed that the product 1 obtained through the inventive method as described above is a highly versatile product.

Such product 1 may be used in the manufacture of items such as bags, envelopes, pouches, mats, fashion accessories and products, indoor and outdoor furniture and similar items.

Those skilled in the art will obviously appreciate that a number of changes and variants may be made to the arrangements as described hereinbefore to meet specific needs, without departure from the scope of the invention, as defined in the following claims.

## Claims

1. A product (1) having a weft (2) and a warp (3), **characterized in that** said weft (2) and/or said warp (3) are formed of strips (4) of polylaminate material.

2. A product as claimed in claim 1, **characterized in that** said strips (4) of polylaminate material have predetermined length (L), width (1) and thickness (S).

3. A product as claimed in claim 1 or 2, **characterized in that** said polylaminate material comprises at least two sheets (5, 6) of different materials.

4. A product as claimed in claim 3, **characterized in that** one sheet (5) of material of said at least two sheets (5, 6) is a sheet of metal material and the other sheet (6) of material of said at least two sheets (5, 6) is a sheet of polymer material.

5. A product as claimed in claim 4, **characterized in that** said sheet of metal material (5) is both internally and externally covered with said sheet of polymer material (6).

6. A product as claimed in claims 4 to 5, **characterized in that** the sheet of metal material (5) is made of aluminum.

7. A product as claimed in claims 4 to 6, **characterized in that** said sheet of polymer material (6) is made of polypropylene.

8. A product as claimed in claims 4 to 6, **characterized in that** said sheet of polymer material (6) is made of polyethylene.

9. A product as claimed in claim 4, **characterized in that** the sheet of metal material (5) is internally covered with a sheet of polyethylene and is externally covered with a sheet of polypropylene.

10. A product as claimed in claims 4 to 8, **characterized in that** the sheet of metal material (5) is internally covered with a sheet of polypropylene and is externally covered with a sheet of polyethylene.

11. A product as claimed in claims 3 to 10, **characterized in that** said materials that form said at least two sheets (5, 6) are selected among arnite/omnialite, aluminum, polyethylene, polypropylene and paper.

12. A product as claimed in claims 1 to 11, **characterized in that** said strips (4) of polylaminate material are obtained from production scrap.

13. A method for making a product (1), said product (1) being as claimed in claims 1 to 12, said method comprising the steps of:
- recovering the polylaminate production scrap;
- cutting said production scrap into strips (4), said strips (4) having predetermined length (L), width (1) and thickness (S);
- weaving said strips (4) to obtain said product (1).

14. A method as claimed in claim 13 wherein, after said step of weaving said strips (4), a further cutting, gluing and/or bonding step is provided, depending on the type of application and use for which said product (1) is designed.

15. An item obtained from a product as claimed in claims 1 to 12, said item having a weft (2) and/or a warp (3), said item being selected among bags, envelopes, pouches, mats, fashion accessories and products, indoor and outdoor furniture and similar items.
